# EUROPEAN PATENT SPECIFICATION

(11) **EP 4 190 926 B1**
(45) Date of publication and mention of the grant of the patent: **04.06.2025**
(21) Application number: 21848759.3
(22) Date of filing: 29.07.2021
(51) Int. Cl.: C22B 26/12, C02F 1/26, C22B 3/40, C22B 3/38, C22B 7/00, B01D 11/00, C02F 1/00

(54) **METHOD FOR RECOVERING LITHIUM FROM LITHIUM-CONTAINING WASTEWATER**
VERFAHREN ZUR RÜCKGEWINNUNG VON LITHIUM AUS LITHIUMHALTIGEM ABWASSER
PROCÉDÉ POUR LA RÉCUPÉRATION DE LITHIUM À PARTIR D'EAU RÉSIDUAIRE CONTENANT DU LITHIUM

(30) Priority: 31.07.2020 CN 202010762591
(43) Date of publication of application: 07.06.2023
(73) Proprietor: Hunan Brunp Recycling Technology Co., Ltd., Changsha, Hunan 410600 (CN); Guangdong Brunp Recycling Technology Co., Ltd, Foshan, Guangdong 528100 (CN); Hunan Brunp Vehicles Recycling Co., Ltd., Changsha, Hunan 410600 (CN)
(72) Inventor: ZHANG, Rongrong, Changsha, Hunan 410600 (CN); LI, Shengkang, Changsha, Hunan 410600 (CN); LIU, Huanghua, Changsha, Hunan 410600 (CN); LIU, Yongqi, Changsha, Hunan 410600 (CN); GONG, Qinxue, Changsha, Hunan 410600 (CN); LI, Changdong, Changsha, Hunan 410600 (CN)
(74) Representative: Torner, Juncosa I Associats, SL
(86) International application number: PCT/CN2021/109113
(87) International publication number: WO 2022/022608

(56) References cited:
- CN-A- 107 058 742
- CN-A- 108 611 497
- CN-A- 109 088 116
- CN-A- 109 852 797
- CN-A- 109 852 797
- CN-A- 111 945 017
- KUANG SHENGTING ET AL: "Progress in the extraction and separation of rare earths and related metals with novel extractants: A review", SCIENCE CHINA TECHNOLOGICAL SCIENCES, SCIENCE CHINA PRESS, HEIDELBERG, vol. 61, no. 9, 19 July 2018 (2018-07-19), pages 1319 - 1328, XP036617225, ISSN: 1674-7321, [retrieved on 20180719], DOI: 10.1007/S11431-018-9295-0
- JINQIU XU ET AL: "A REVIEW OF PROCESSES AND TECHNOLOGIES FOR THE RECYCLING OF LITHIUM-ION SECONDARY BATTERIES", JOURNAL OF POWER SOURCES, ELSEVIER, AMSTERDAM, NL, vol. 177, no. 2, 1 March 2008 (2008-03-01), pages 512 - 527, XP002731592, ISSN: 0378-7753, [retrieved on 20080114], DOI: 10.1016/J.POWSOUR.2007.11.074
- GUI LIU ET AL: "Novel approaches for lithium extraction from salt-lake brines: A review", HYDROMETALLURGY., vol. 187, 10 May 2019 (2019-05-10), NL, pages 81 - 100, XP055590851, ISSN: 0304-386X, DOI: 10.1016/j.hydromet.2019.05.005
- SEVRAIN CHARLOTTE M ET AL: "Phosphonic acid: preparation and applications", BEILSTEIN JOURNAL OF ORGANIC CHEMISTRY, vol. 13, 19 September 2017 (2017-09-19), GB, pages 2186 - 2213, XP093193976, ISSN: 1860-5397, Retrieved from the Internet <URL:https://www.beilstein-journals.org/bjoc/content/pdf/1860-5397-13-219.pdf> DOI: 10.3762/bjoc.13.219
- HANO T., JIANG ZHIMEI: "Recovery of Lithium From Geothermal Water with Solvent Extraction Techniques", no. 2, 2 July 1993 (1993-07-02), pages 57 - 62, XP055891725, ISSN: 1009-2617, DOI: 10.13355/j.cnki.sfyj.1993.02.011

## Description

### TECHNICAL FIELD

The present disclosure relates to the field of wet metallurgy, and particularly to a method for recovering lithium from lithium-containing wastewater.

### BACKGROUND

Lithium is an important rare element, known as an "energy metal" and an "important element to promote the world forward." Lithium metal and its compounds have been widely used in the fields of electronics, metallurgy, chemical industry, medicine, nuclear energy, aerospace and energy. Lithium resources exist in the form of solid mines and salt lake brines; since salt lakes are rich in lithium resources and the production cost is low, at present, the field of lithium extraction that is relatively mature and enables large-scale production is the extraction of lithium from salt lakes.

Researchers have done a lot of research on the extraction of lithium and developed a variety of technologies, including precipitation and calcination process, membrane separation technology, adsorption technology, ion exchange technology and solvent extraction technology. Among them, the solvent extraction technology has large processing capacity, simple operation and low pollution, thus being extensively researched and developed. The Patent US 3537813 filed in 1970 discloses a solvent extraction method for extracting lithium from a high-magnesium solution. In the method, lithium is extracted preferably by using 20% TBP (tributyl phosphate) and 80% DIBK (diisobutyl ketone) as the extractant, and Fe (III) as the co-extracting ion; and iron and lithium are back-extracted with water after the loaded organic phase is washed. NaCl is added to the stripping solution, and iron is extracted with TBP and diethylhexyl phosphate to achieve separation of iron and lithium. In the process, two extraction and stripping cycles are used, the iron is difficult to control during the operation, and DIBK has high water solubility and serious loss. In 1979, the Qinghai Salt Lake Research Institute of the Chinese Academy of Sciences used a tributyl phosphate-ferric chloride-kerosene system to conduct a scale-up test of lithium extraction from the brine of the Dachaidan Salt Lake, and obtained an anhydrous lithium chloride product with a purity of 98.5%. In 2012, the Shanghai Institute of Organic Chemistry, Chinese Academy of Sciences and Qinghai Institute of Salt Lakes, Chinese Academy of Sciences studied the process of extracting lithium from Qinghai high-magnesium-lithium-ratio salt lake brine with a 20% N235 (N,N-bis(2-ethylhexyl)acetamide)-30% TBP-50% sulfonated kerosene system, and the experiment results of the three-stage countercurrent extraction cascade showed that the extraction rate of lithium reached 96%. Patent CN 108866352 A provides a process for extracting lithium from salt lake brine to produce lithium carbonate. The extraction system includes an extractant, a co-extractant, and a diluent. The extractant is a phosphate ionic liquid containing functional groups for extracting lithium. The solution after extracting and degreasing is removed of magnesium with sodium carbonate and sodium hydroxide, and then subjected to lithium precipitation with sodium carbonate. The process uses dilute hydrochloric acid for back extraction, and the organic phase can be regenerated only by washing with pure water, which reduces the saponification and iron removal procedures, simplifies the process route, and greatly reduces the production cost.

At present, the extraction systems that have undergone industrial experiments or have been used in industrial production in China include amide extractant (N503, N523), neutral phosphine extractant TBP, and ketone extractant DIBK, which all need the addition of ferric chloride as a co-extractant, and the extraction with ferric chloride as a co-extractant must be carried out under acidic conditions to ensure the formation of FeCl₄⁻ and prevent the hydrolysis of Fe³⁺. In addition, the back extraction of Li⁺ requires a strong acid solution of above 6 mol/L which causes serious corrosion of the equipment, and emulsification occurs during the use of FeCl₃. Iron is difficult to back-extract after it is combined with the organic. On the one hand, this will increase the organic density and viscosity, which causes it difficult to separate the phases (the salt lake lithium extraction usually uses a centrifugal extractor, which has high investment costs). On the other hand, this will reduce the organic loading.

CN109852797A discloses an extraction solvent for extracting separating lithium element and a method for extracting separating the lithium element thereof, and belongs to the technical field of wet process metal metallurgy. An acid extracting agent or the mixture of the acid extracting agent and a neutral phosphorous extracting agent is taken as an extracting agent, and the lithium element in a solution containing lithium is extracted and separated by a saponated extracting agent to obtain a solution containing the lithium element. The extracting solvent and the method have the advantages that ferric chloride is not taken as a synergist, the application is wide, the obtaining of the extracting agent is easy, the investment is low, the cost is low, the use is convenient, safe and reliable, industrial production is convenient, the lithium element can be recovered from production waste water of lithium carbonate and the like, and the lithium element can be extracted from high-impurity and complex raw materials of high magnesium-lithium brine and the like. The solvent and the method are particularly suitable for extracting the lithium element in brine in China to help to improve the problems of low lithium resource grade, high separation difficulty, severe pollution and high cost in China.

Therefore, there is an urgent need to provide a method for recovering lithium in which an extraction system has good selectivity of lithium and sodium, high loading capacity and short process flow.

### SUMMARY

The objective of the present disclosure is to provide a method for recovering lithium from lithium-containing wastewater. The lithium-containing wastewater is sulfate raffinate wastewater produced during the recovery process of a ternary battery. The method for extracting lithium does not require the addition of ferric chloride as co-extractant, the extraction system has good selectivity of lithium and sodium, high loading capacity and short process flow, and the system enables good phase separation without the need of a centrifugal extractor, resulting in low equipment investment, which has a breakthrough significance in the battery recycling industry.

The invention is defined by appended claim 1, preferred embodiments are defined in the dependent claims.

In order to achieve the objective mentioned above, the following technical solutions are used in the present disclosure:
A method for recovering lithium from lithium-containing wastewater, comprising the following steps:
(1) adjusting a pH of the lithium-containing wastewater to be pH 2-7; and
(2) preparing and saponifying an organic phase successively, adding a saponified organic phase to the lithium-containing wastewater for extraction, and separating an aqueous phase to obtain a loaded organic phase containing lithium ions; wherein a solution for adjusting the pH of the lithium-containing wastewater is sulfuric acid; the organic phase comprises the following components: an extractant, a co-extractant and a diluent.

The feed liquid mentioned above is a sulfate system, in which it is found that using bis(2,4,4-trimethylpentyl) phosphinic acid and tributyl phosphate in combination to extract lithium-containing wastewater, the highest extraction rate is obtained.

Preferably, in step (1), the lithium-containing wastewater is sulfate raffinate wastewater after extraction of a nickel-cobalt-manganese ternary material.

In step (1), the Li⁺ concentration of the lithium-containing wastewater is 0.5-4.0 g/L.

In step (1), the Na⁺ concentration of the lithium-containing wastewater is 15-40 g/L.

In step (2), the organic phase consists of the following components by mass percentage: 10%-40% of an extractant, 10%-40% of a co-extractant and 20%-70% of a diluent.

The extractant is bis(2,4,4-trimethylpentyl) phosphinic acid.

The co-extractant is tributyl phosphate.

The diluent is sulfonated kerosene.

In step (2), the saponifying agent used for saponifing the organic phase is sodium hydroxide.

In step (2), the saponified organic phase and the lithium-containing wastewater are in a volume ratio of 1: (0.5-4) for extraction.

Preferably, in step (2), the amount of sodium hydroxide is 1-1.4 times the concentration of Li⁺ in the wastewater.

Preferably, in step (2), the extraction is conducted at a temperature of 10°C-50°C, and the extraction lasts for 1-10min.

Preferably, in step (2), a rotation speed of shaking in the extraction is 150-300rpm, and the shaking lasts for 1-10min.

In step (2), the extraction is multi-stage countercurrent extraction.

Advantages of the present disclosure:
(1) The combined extractant system of the present disclosure does not need the addition of ferric chloride as a co-extractant, thus avoiding the occurrence of emulsification caused by the hydrolysis of Fe³⁺.
(2) The combined extractant system of the present disclosure has good lithium-sodium selectivity and high loading capacity. After 4-stage countercurrent extraction, Li in the wastewater can be reduced from 3.7 g/L to 0.126 g/L, and the extraction rate can reach 96.6%.
(3) The combined extractant system of the present disclosure has a short process flow, and enables good phase separation without the need of a centrifugal extractor, resulting in low equipment investment, which has a breakthrough significance in the battery recycling industry.

### DETAILED DESCRIPTION

For a more thorough understanding of the present disclosure, preferred experimental schemes of the present disclosure will be described below in conjunction with examples to further illustrate the features and advantages of the present disclosure. The scope of protection of the present disclosure is defined by the scope of the appended claims.

### Example 1

A method for recovering lithium from lithium-containing wastewater was provided, comprising the following steps:
(1) the lithium-containing wastewater was adjusted to pH 2.0 using sulfuric acid, and the concentration of Li⁺ in the lithium-containing wastewater was 3.7 g/L and the concentration of Na⁺ in the lithium-containing wastewater was 21 g/L;
(2) 40% C272 (bis(2,4,4-trimethylpentyl) phosphinic acid), 20% TBP (tributyl phosphate) and 40% sulfonated kerosene calculated by mass percentage were formulated into an organic phase. 100mL of the organic phase was saponified with 5 mol/L sodium hydroxide at 1.4 times the lithium concentration in the lithium-containing wastewater. After saponification, no phase separation was required. 100mL of the saponified organic phase and 100mL of the lithium-containing wastewater were placed into a separatory funnel, shaken at a speed of 240rpm, extracted for 4min at a temperature of 40°C, and allowed to stand for phase separation to obtain an organic phase containing lithium ions and a raffinate.

The detection results of the content of lithium in the raffinate are shown in Table 1. The single-stage extraction rate of lithium is 53.6%.

### Example 2

A method for recovering lithium from lithium-containing wastewater was provided, comprising the following steps:
(1) the lithium-containing wastewater was adjusted to pH 4.0 using sulfuric acid, and the concentration of Li⁺ in the lithium-containing wastewater was 3.7 g/L and the concentration of Na⁺ in the lithium-containing wastewater was 21 g/L;
(2) 40% C272 (bis(2,4,4-trimethylpentyl) phosphinic acid), 20% TBP (tributyl phosphate) and 40% sulfonated kerosene calculated by mass percentage were formulated into an organic phase. 100mL of the organic phase was saponified with 5 mol/L sodium hydroxide at 1.4 times the lithium concentration in the lithium-containing wastewater. After saponification, no phase separation was required. 100mL of the saponified organic phase and 100mL of the lithium-containing wastewater were placed into a separatory funnel, shaken at a speed of 240rpm, extracted for 4min at a temperature of 40°C, and allowed to stand for phase separation to obtain an organic phase containing lithium ions and a raffinate.

The detection results of the content of lithium in the raffinate are shown in Table 1. The extraction rate of lithium is 56.7%.

### Example 3

A method for recovering lithium from lithium-containing wastewater was provided, comprising the following steps:
(1) the lithium-containing wastewater was adjusted to pH 6.0 using sulfuric acid, and the concentration of Li⁺ in the lithium-containing wastewater was 3.7 g/L and the concentration of Na⁺ in the lithium-containing wastewater was 21 g/L;
(2) 40% C272 (bis(2,4,4-trimethylpentyl) phosphinic acid), 20% TBP (tributyl phosphate) and 40% sulfonated kerosene calculated by volume percentage were formulated into an organic phase. 100mL of the organic phase was saponified with 5 mol/L sodium hydroxide at 1.4 times the lithium concentration in the lithium-containing wastewater. After saponification, no phase separation was required. 100mL of the saponified organic phase and 100mL of the lithium-containing wastewater were placed into a separatory funnel, shaken at a speed of 240rpm, extracted for 4min at a temperature of 40°C, and allowed to stand for phase separation to obtain an organic phase containing lithium ions and a raffinate.

The detection results of the content of lithium in the raffinate are shown in Table 1. The extraction rate of lithium is 58.6%.

**Table 1 Extraction of lithium-containing wastewater by C272 and TBP combined extractant at different pH values**

| | Li in wastewater (g/L) | pH of wastewater | Li in raffinate (g/L) | Extraction rate/% |
|---|---|---|---|---|
| Example 1 | 3.7 | 2.0 | 1.717 | 53.6 |
| Example 2 | 3.7 | 4.0 | 1.600 | 56.7 |
| Example 3 | 3.7 | 6.0 | 1.531 | 58.6 |

Table 1 indicates that in an acidic environment, the higher the pH, the higher the extraction rate of lithium.

### Example 4

A method for recovering lithium from lithium-containing wastewater was provided, comprising the following steps:
(1) the lithium-containing wastewater was adjusted to pH 2.0 using sulfuric acid, and the concentration of Li⁺ in the lithium-containing wastewater was 3.7 g/L and the concentration of Na⁺ in the lithium-containing wastewater was 21 g/L;
(2) 20% C272 (bis(2,4,4-trimethylpentyl) phosphinic acid), 10% TBP (tributyl phosphate) and 70% sulfonated kerosene calculated by mass percentage were formulated into an organic phase. 100mL of the organic phase was saponified with 5 mol/L sodium hydroxide at 1.4 times the lithium concentration in the lithium-containing wastewater. After saponification, no phase separation was required. 100mL of the saponified organic phase and 50mL of the lithium-containing wastewater were placed into a separatory funnel, shaken at a speed of 240rmp, extracted for 4min at a temperature of 30°C, and allowed to stand for layer separation for 10min, and then an aqueous phase was separated out, thereby accomplishing 4-stage countercurrent extraction simulation experiment.

The detection results of the lithium content in the raffinate and the lithium content in the organic phase are shown in Table 2. The total extraction rate of lithium is 96.6%.

### Example 5

A method for recovering lithium from lithium-containing wastewater was provided, comprising the following steps:
(1) the lithium-containing wastewater was adjusted to pH 2.0 using sulfuric acid, and the concentration of Li⁺ in the lithium-containing wastewater was 3.7 g/L and the concentration of Na⁺ in the lithium-containing wastewater was 21 g/L;
(2) 20% C272 (bis(2,4,4-trimethylpentyl) phosphinic acid), 10% TBP (tributyl phosphate) and 70% sulfonated kerosene calculated by mass percentage were formulated into an organic phase. 100mL of the organic phase was saponified with 5 mol/L sodium hydroxide at 1.1 times the lithium concentration in the lithium-containing wastewater. After saponification, no phase separation was required. 100mL of the saponified organic phase and 50mL of the lithium-containing wastewater were placed into a separatory funnel, shaken at a speed of 240rmp, extracted for 4min at a temperature of 30°C, and allowed to stand for layer separation for 10min, and then an aqueous phase was separated out, thereby accomplishing 4-stage countercurrent extraction simulation experiment.

The detection results of the lithium content in the raffinate and the lithium content in the organic phase are shown in Table 2. The total extraction rate of lithium is 79%.

### Example 6

A method for recovering lithium from lithium-containing wastewater was provided, comprising the following steps:
(1) the lithium-containing wastewater was adjusted to pH 2.0 using sulfuric acid, and the concentration of Li⁺ in the lithium-containing wastewater was 3.7 g/L and the concentration of Na⁺ in the lithium-containing wastewater was 21 g/L;
(2) 20% C272 (bis(2,4,4-trimethylpentyl) phosphinic acid), 10% TBP (tributyl phosphate) and 70% sulfonated kerosene calculated by mass percentage were formulated into an organic phase. 100mL of the organic phase was saponified with 5 mol/L sodium hydroxide at 1.22 times the lithium concentration in the lithium-containing wastewater. After saponification, no phase separation was required. 100mL of the saponified organic phase and 50mL of the lithium-containing wastewater were placed into a separatory funnel, shaken at a speed of 240rmp, extracted for 4min at a temperature of 30°C, and allowed to stand for layer separation for 10min, and then an aqueous phase was separated out, thereby accomplishing 4-stage countercurrent extraction simulation experiment.

The detection results of the lithium content in the raffinate and the lithium content in the organic phase are shown in Table 2. The total extraction rate of lithium is 86%.

**Table 2 Multi-stage extraction of lithium-containing wastewater by C272 and TBP combined extractant at various sanponification factors**

| | Sanponification factors | Li in raffinate (g/L) | Li in organic phase (g/L) | Extraction rate/% |
|---|---|---|---|---|
| Example 4 | 1.4 | 0.126 | 1.862 | 97% |
| Example 5 | 1.1 | 0.77 | 1.488 | 79% |
| Example 6 | 1.22 | 0.53 | 1.61 | 86% |

It can be seen from Table 2 that the higher the saponification factor, the higher the total extraction rate.

### Comparative example 1

The difference between Example 3 and Comparative example 1 was that the organic phase was prepared from 40% C272 (bis(2,4,4-trimethylpentyl) phosphinic acid) and 60% sulfonated kerosene calculated by mass percentage.

The detection results of the content of lithium in the raffinate are shown in Table 3.

### Comparative example 2

The difference between Example 3 and Comparative example 1was that the organic phase was prepared from 20% TBP (tributyl phosphate) and 80% sulfonated kerosene calculated by mass percentage.

The detection results of the content of lithium in the raffinate are shown in Table 3.

The test results of the content of lithium in the raffinate are shown in Table 3. The extraction rate of calcium by this combined extractant is 58.6%, and the extraction rate of Li by C272 (bis(2,4,4-trimethylpentyl) phosphinic acid) is 33%, and the extraction rate of Li by TBP (tributyl phosphate) is 2%.

**Table 3 Comparison of extraction rate of C272 and TBP combined extractant with that of C272 or TBP alone**

| | Li in wastewater *(g*/*L)* | Li in raffinate (g/L) | Extraction rate/% |
|---|---|---|---|
| Example 3 | 3.7 | 1.531 | 58.6 |
| Comparative example 1 | 3.7 | 2.439 | 33 |
| Comparative example 2 | 3.7 | 3.611 | 2 |

### Comparative example 3

A method for recovering lithium from lithium-containing wastewater was provided, comprising the following steps:
(1) a hydrochloric acid system solution was prepared, the concentration of Li⁺ in the solution was controlled as 3.7 g/L, the concentration of Na⁺ in the solution was controlled as 21 g/L, and the pH of the lithium-containing wastewater was adjusted to 6.0;
(2) 40% C272 (bis(2,4,4-trimethylpentyl) phosphinic acid), 20% TBP (tributyl phosphate), ferric chloride, and 40% sulfonated kerosene calculated by volume percentage were formulated into an organic phase. 100mL of the organic phase was saponified with 5 mol/L sodium hydroxide at 1.4 times the lithium concentration in the lithium-containing wastewater. After saponification, no phase separation was required. 100mL of the saponified organic phase and 100mL of the lithium-containing wastewater were placed into a separatory funnel, shaken at a speed of 240rpm, extracted for 4min at a temperature of 40°C, and allowed to stand for phase separation to obtain an organic phase containing lithium ions and a raffinate.

The detection results of the content of lithium in the raffinate are shown in Table 4. The extraction rate of lithium is 59%.

**Table 4 Extraction of lithium-containing wastewater by C272 and TBP combined extractant in various feed liquid systems**

| | Li in wastewater *(g*/*L)* | Li in raffinate (g/L) | Extraction rate/% |
|---|---|---|---|
| Example 3 | 3.7 | 1.531 | 58.6 |
| Comparative example 3 | 3.7 | 1.517 | 59 |

It can be seen from the data in Table 4 that the extraction organic system is also suitable for the recovery of lithium in the hydrochloric acid system. The lithium extraction capacity of the organic phase for the two systems does not show significant difference, but the use of the hydrochloric acid system needs the addition of ferric chloride as a co-extractant, resulting in the occurrence of emulsification caused by the hydrolysis of Fe³⁺.

A method for recovering lithium from high-salt low-lithium wastewater provided by the present disclosure is described in detail above. Specific examples are used herein to set forth the principle and implementation of the present disclosure. The description of the above examples is only used to help understand the method and core idea of the present disclosure, including the best mode, and also enables anyone skilled in the art to practice the present disclosure, including manufacturing and using any device or system, and implementing any combined method. The scope of patent protection of the present disclosure is defined by the claims.

## Claims

1. A method for recovering lithium from lithium-containing wastewater, comprising the following steps:
(1) adjusting a pH of the lithium-containing wastewater to be 2-7; and
(2) preparing and saponifying an organic phase successively, adding a saponified organic phase to the lithium-containing wastewater for extraction, and separating an aqueous phase to obtain a loaded organic phase containing lithium ions; wherein a solution for adjusting the pH of the lithium-containing wastewater is sulfuric acid; the organic phase comprises the following components: an extractant, a co-extractant and a diluent;
wherein, the organic phase consists of the following components by mass percentage: 10%-40% of the extractant, 10%-40% of the co-extractant and 20%-70% of the diluent;
the extractant is bis(2,4,4-trimethylpentyl) phosphinic acid; the co-extractant is tributyl phosphate; the diluent is sulfonated kerosene;
a solution used for saponifying is sodium hydroxide;
the saponified organic phase and the lithium-containing wastewater are in a volume ratio of 1 : (0.5-4) for extraction;
the extraction is multi-stage countercurrent extraction;
wherein in step (1), the lithium-containing wastewater mainly comprises Li⁺, Na⁺ and SO₄²⁻; the Li⁺ concentration of the lithium-containing wastewater is 0.5-4.0 g/L; the Na⁺ concentration of the lithium-containing wastewater is 15-40 g/L.

2. The method according to claim 1, wherein in step (1), the lithium-containing wastewater is sulfate raffinate wastewater after extraction of a nickel-cobalt-manganese ternary material.

3. The method according to claim 1, wherein in step (2), the extraction is conducted at a temperature of 10°C-50°C, and the extraction lasts for 2-8min.

## Patentansprüche

1. Verfahren zur Rückgewinnung von Lithium aus lithiumhaltigem Abwasser, umfassend die folgenden Schritte:
(1) Einstellen eines pH-Werts des lithiumhaltigen Abwassers auf 2-7; und
(2) Herstellen und Verseifen einer organischen Phase in Folge, Hinzufügen einer verseiften organischen Phase zu dem lithiumhaltigen Abwasser zur Extraktion und Abtrennen einer wässrigen Phase, um eine beladene organische Phase zu erhalten, die Lithiumionen enthält; wobei eine Lösung zum Einstellen des pH-Werts des lithiumhaltigen Abwassers Schwefelsäure ist; wobei die organische Phase die folgenden Komponenten umfasst: ein Extraktionsmittel, ein Coextraktionsmittel und ein Verdünnungsmittel;
wobei die organische Phase aus den folgenden Komponenten in Massenprozent besteht: 10 % - 40 % des Extraktionsmittels, 10 % - 40 % des Coextraktionsmittels und 20 % - 70 % des Verdünnungsmittels;
das Extraktionsmittel Bis(2,4,4-trimethylpentyl)phosphinsäure ist; das Coextraktionsmittel Tributylphosphat ist; das Verdünnungsmittel sulfoniertes Kerosin ist;
eine zur Verseifung verwendete Lösung Natriumhydroxid ist; die verseifte organische Phase und das lithiumhaltige Abwasser in einem Volumenverhältnis von 1 : (0,5-4) für die Extraktion stehen;
die Extraktion eine mehrstufige Gegenstromextraktion ist;
wobei in Schritt (1) das lithiumhaltige Abwasser hauptsächlich Li⁺, Na⁺ und SO₄²⁻ umfasst; die Li⁺-Konzentration des lithiumhaltigen Abwassers 0,5-4,0 g/l beträgt; die Na⁺-Konzentration des lithiumhaltigen Abwassers 15-40 g/l beträgt.

2. Verfahren nach Anspruch 1, wobei in Schritt (1) das lithiumhaltige Abwasser Sulfat-Raffinat-Abwasser nach Extraktion eines ternären Nickel-Kobalt-Mangan-Materials ist.

3. Verfahren nach Anspruch 1, wobei in Schritt (2) die Extraktion bei einer Temperatur von 10 °C - 50 °C durchgeführt wird und die Extraktion 2-8 min dauert.

## Revendications

1. Procédé pour la récupération de lithium à partir d'eau résiduaire contenant du lithium, comprenant les étapes suivantes :
(1) ajuster le pH de l'eau résiduaire contenant du lithium à 2-7 ; et
(2) préparer et saponifier une phase organique successivement, ajouter une phase organique saponifiée à l'eau résiduaire contenant du lithium pour l'extraction, et séparer une phase aqueuse pour obtenir une phase organique chargée contenant des ions de lithium ; dans lequel une solution pour ajuster le pH de l'eau résiduaire contenant du lithium est de l'acide sulfurique ; la phase organique comprend les composants suivants : un agent d'extraction, un agent de co-extraction et un diluant ;
dans lequel, la phase organique est constitué des composants suivants en pourcentage en masse : 10%-40% de l'agent d'extraction, 10%-40% de l'agent de co-extraction et 20%-70% du diluent ;
l'agent d'extraction est l'acide bis(2,4,4-triméthylpéntyl)phosphinique ; l'agent de co-extraction est le phosphate de tributyle ; le diluent est le kérosène sulfoné ;
une solution utilisée pour saponifier est l'hydroxyde de sodium ; la phase organique saponifiée et l'eau résiduaire contenant du lithium se trouvent dans un rapport en volume de 1:(0,5-4) pour l'extraction ;
l'extraction est une extraction à contre-courant à plusieurs étapes ;
dans lequel, dans l'étape (1), l'eau résiduaire contenant du lithium comprend principalement du Li⁺, Na⁺ et SO4²⁻ ; la concentration en Li⁺ de l'eau résiduaire contenant du lithium est de 0,5-4,0 g/l ; la concentration en Na⁺ de l'eau résiduaire contenant du lithium est de 15-40 g/l.

2. Procédé selon la revendication 1, dans lequel, dans l'étape (1), l'eau résiduaire contenant du lithium est de l'eau résiduaire de raffinat de sulfate après l'extraction d'un matériau ternaire de nickel-cobalt-manganèse.

3. Procédé selon la revendication 1, dans lequel, dans l'étape (2), l'extraction est mise en œuvre à une température de 10°C-50°C, et l'extraction dure 2-8 min.
